# EUROPÄISCHE PATENTSCHRIFT

(11) **EP 0 556 533 B1**
(45) Veröffentlichungstag und Bekanntmachung des Hinweises auf die Patenterteilung: **29.05.1996**
(21) Anmeldenummer: 92810127.8
(22) Anmeldetag: 21.02.1992
(51) Int. Cl.: F16L 58/18

(54) **Betonrohr mit einem Spitz- und Muffenende**
Concrete pipe provided with a socket and spigot end
Conduit en béton muni d'éléments d'emboîtment

(43) Veröffentlichungstag der Anmeldung: 25.08.1993
(73) Patentinhaber: Brink, Heinz Dieter, CH-3043 Uettligen (CH); Lutz, Josef, D-72505 Krauchenwies (DE)
(72) Erfinder: Brink, Heinz Dieter, CH-3043 Uettligen (CH); Lutz, Josef, D-72505 Krauchenwies (DE)
(74) Vertreter: AMMANN PATENTANWAELTE AG BERN

(56) Entgegenhaltungen:
- EP-A- 0 471 319
- DE-A- 2 702 884
- DE-A- 2 804 814
- FR-A- 1 436 856

## Beschreibung

Die vorliegende Erfindung bezieht sich auf ein Betonrohr mit einem Spitz- und Muffenende, insbesondere auf ein Betonrohr mit Verbundauskleidung. Betonrohre mit Verbundauskleidungen sowohl aus Thermoplasten als auch aus Duroplasten und Duroplastbeton sind seit langem bekannt und werden zunehmend eingesetzt beziehungsweise zum Ersatz bestehender Rohre verwendet, da die Abwässer immer mehr aggressive Stoffe enthalten.

Während die Auskleidung von zylindrischen Betonrohren mit Polymerbeton oder Kunststoff bereits vielfach verwendet wird, ist die Ausgestaltung der Uebergänge zwischen der zylindrischen Auskleidung und den Muffen- und Spitzenden einerseits und die Ausgestaltung der Muffen- und Spitzenden andererseits selber noch unbefriedigend.

Aus der EP-A0 471 319 ist ein Betonrohr bekannt, bei welchem das Muffenende beim Giessen des Betonrohres mit einer Kunststoff-Auskleidung versehen wird, während das Spitzendteil nach seiner Herstellung und Bearbeitung mit einer Auskleidung versehen wird. Einerseits ergeben sich durch das Giessen von Kunststoff mit dem Beton Probleme bei der Herstellung und andererseits erfordert die Bearbeitung des Spitzendteils und seine anschliessende Auskleidung einen recht hohen Arbeitsaufwand, insbesondere, falls die notwendige Passgenauigkeit verwirklicht werden soll.

Aus der DE-A-2 702 884 ist ferner ein Abflussrohr bekannt, mit einem Betonrohr, in dem ein Kunststoffrohr nachträglich eingeführt wird und an dem Kunststoffrohr das Muffen- und Spitzende angeformt, bzw. angeschweisst werden. Diese Herstellungsweise erfordert einen hohen Aufwand und die Verwendung von Endteilen aus Kunststoff ist aus Festigkeits- und Umweltgründen nicht ohne Probleme.

Die DE-A-2 804 814 schliesslich offenbart ein Betonrohr, bei welchem die Kunststoff-Innenauskleidung zwei Ueberstände bilden, aus denen die beiden Enden geformt werden. Zwecks besserer Abdichtung erhalten die Endteile dichtende Ringkörper. Es handelt sich demzufolge um aufwendig hergestellte Rohre mit den Kunststoffendteilen innewohnenden Nachteilen.

Es ist von diesem bekannten Stand der Technik ausgehend Aufgabe der vorliegenden Erfindung ein Betonrohr mit Muffen- und Spitzende anzugeben, dessen Endteile einerseits eine hohe Festigkeit und eine hohe Präzision aufweisen und andererseits eine einfache und kostengünstige Herstellung erlauben, das Verlegen begünstigen sowie eine Vielfalt von Abdichtungsmöglichkeiten bietet. Ein Betonrohr, das diese Aufgabe löst, ist in Anspruch 1 definiert.

Die Erfindung wird im Folgenden anhand einer Zeichnung von Ausführungsbeispielen näher erläutert.
- Fig. 1: zeigt in perspektivischer Sicht ein erfindungsgemässes Muffenendteil,
- Fig. 2: zeigt in perspektivischer Sicht ein erfindungsgemässes Spitzendenteil,
- Fig. 3: zeigt im Schnitt ein erstes Ausführungsbeispiel eines Rohrendes mit den beiden Endteilen,
- Fig. 4: zeigt eine Ausführungsvariante zu Figur 3 und
- Fig. 5: zeigt ein weiteres Ausführungsbeispiel eines Rohrendes mit den beiden Endteilen.

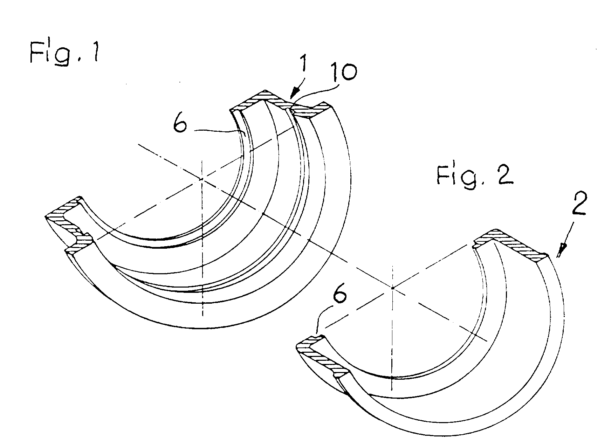

In Figur 1 erkennt man eine Hälfte eines Muffenendes 1 und in Figur 2 die Hälfte des Spitzendes 2. Die beiden Teile werden in vorliegendem Ausführungsbeispiel aus Polymerbeton gefertigt, wobei es vorteilhaft ist, wenn an der Oberfläche mehr Polymerharz vorhanden ist, um eine möglichst glatte und porenfreie Oberfläche zu erzielen. Diese kann einerseits dadurch das Betonrohr noch besser vor Eindringen von aggressivem Abwasser schützen und andererseits erleichtert sie insbesondere das Verlegen bzw. das Ineinanderfügen der Rohre. Dadurch, dass die Verbindungsstücke der Rohre vorgefertigt werden, können diese mit sehr hohen Massgenauigkeit angefertigt werden, was das Verlegen und Abdichten der fertigen Rohre erleichtert.

Die Vorfertigung der Verbindungsstücke erlaubt es aber auch, verschiedene Dichtungssysteme vorzusehen, die dem vorgesehenen Verwendungszweck und evtl. Anpassung an bestehende Systeme ermöglichen.

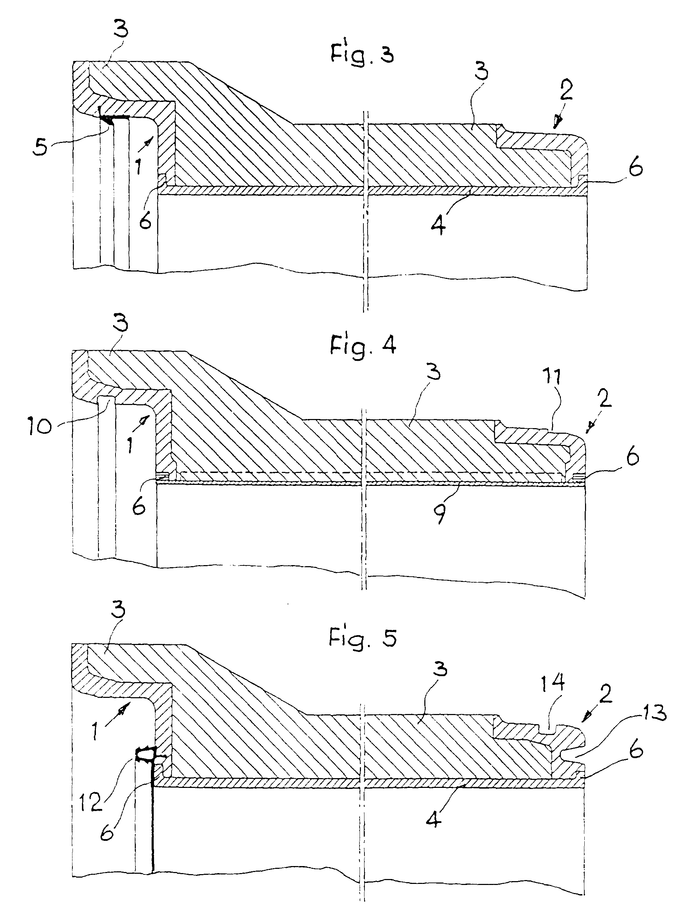

In Figur 3 erkennt man die beiden Enden eines Rohres, wobei links das Muffenende und rechts das Spitzende eingezeichnet ist, was auch bei den Figuren 4 und 5 der Fall ist. Man erkennt das Muffen- oder Spitzendenteil 1 und 2, in denen das Betonrohr 3 eingegossen ist. Das Rohr ist in vorbekannter Weise mit einer Polymerbeton- oder Kunststoffschicht 4 ausgekleidet. In diesem Ausführungsbeispiel ist die Dichtung 5 im Muffenende integriert vorgefertigt worden. Aus Figur 3 geht ferner hervor, dass die vorgefertigten Verbindungsteile mit dem Betonrohr, beziehungsweise Rohrauskleidung verzahnt werden können indem, wie in den Figuren 3, 4 und 5 eingezeichnet, die gegen die Rohrmitte weisenden Kanten der Verbindungsstücke je einen umlaufenden Absatz 6 aufweisen, in den Polymerbeton oder eine dauerelastische Masse vergossen wird, um die Verzahnung herzustellen.

In Figur 4 ist eine Variante zum Dichtsystem angegeben, indem entweder im Muffenendteil eine umlaufende Aussparung 10 vorgefertigt ist, in die eine geeignete Dichtung gelegt werden kann; oder es ist am Spitzende ein Absatz 11 vorgesehen, um eine Keildichtung darauf aufziehen zu können. In Figur 4 ist ferner angedeutet, dass die Rohrauskleidung 9 aus Kunststoff, beispielsweise PVC oder Polyaethylen bestehen kann, wobei der umlaufende Absatz 6 dauerelastisch abgedichtet wird.

In Figur 5 ist ein Rohrende mit einem weiteren Dichtsystem angedeutet, indem eine Dichtung 12 im Muffenende integriert vorgefertigt ist und das Spitzende eine entsprechende umlaufende Ausnehmung 13 aufweist. Zusätzlich kann, wie in Figur 5 am Spitzende angedeutet, ein Dichtsystem vorgesehen werden, wozu eine umlaufende Aussparung 14 am Spitzende angeordnet ist. Wahlweise kann auch. Wie in Fig. 4 gezeigt, ein Absatz 11 vorgesehen werden, um eine Keildichtung aufzuziehen.

Die Verbindungsstücke gemäss Erfindung können problemlos in die Fertigung des Rohres integriert werden. Die mit den Endteilen 1 und 2 versehenen Betonrohre werden nach der Aushärtung des Betons aus einer Warteposition zur Schleuderbank befördert, wobei zunächst die Umfangsgeschwindigkeit im Rohr etwa 50 m pro Minute beträgt. Das Rohr wird mittels einer in das Rohr einfahrende, rotierende Drahtbürste gereinigt und der Staub mit Heissluft ausgeblasen und am Muffenende abgesaugt. Danach wird die Umfangsgeschwindigkeit auf 100 bis 150 m pro Minute erhöht und das Rohr wird mittels einer darein einfahrenden Spritzpistole mit einem restfeuchteabsorbierenden Haftvermittler versehen, der innerhalb kurzer Zeit aushärtet. Nach Erhöhung der Umfangsgeschwindigkeit wird das Rohr mit Polymerbeton beschichtet, wobei eine Wandstärke von 6 bis 8 mm bevorzugt wird. Nach Reduzierungder Umfangsgeschwindigkeit wird das beschichtete Rohr zum Gelieren und Härten weiter mit minimaler Drehzahl gedreht, bis es soweit ausgehärtet ist, dass es zur Endkontrolle gelangen kann. Die so erreichte gute Haftung zwischen Polymerbeton und Beton und selbstverständlich auch zwischen den Endteilen aus Polymerbeton und dem aufgebrachten Polymerbeton sowie die Verzahnungsnuten gewährleisten einen lückenlosen und dichten Verbund der Verbindungsteile mit dem beschichteten Betonrohr.

Um Rohre mit besonders guten Eigenschaften zu erhalten, das heisst mit einem spannungsfreien und korrosionsbeständigen Polymerbeton, wird nach folgendem Verfahren ausgekleidet:
Einbringen eines Haftvermittlers zur Restwasserbindung, Konservierung und Stabilisierung der zu beschichtenden Betonoberfläche,
Einbringen einer besonders alkalibeständigen Sperrschicht auf der Basis ungesättigter Polyesterharze zur Verhinderung einer eventuellen Verseifung in den Randzonen zwischen Beton- und Polymerbeton,
Einbringen eines schrumpfarmen Polyesterbetons, Einbringen einer elastischen und chemikalienbeständigen Deckschicht auf der Basis ungesättigter Polyesterharze.

Derartig hergestellte Rohre weisen nicht nur eine hohe Beständigkeit gegenüber agressiven Abwässern auf sondern lassen sich auch sehr leicht verlegen, da die Endteile mit besonders glatten Oberflächen gut ineinander greifen. Ausserdem können die Verbindungsteile aus Polymerbeton die teilweise verwendeten Stahlschalungen ersetzen und ermöglichen einen problemlosen Wechsel des Dichtungssystems während der Rohrproduktion.

## Patentansprüche

1. Betonrohr mit einem Spitz- und Muffenende, dadurch gekennzeichnet, dass sowohl das Spitzende (2) als auch das Muffenende (1) aus einem vorgefertigten Teil aus Polymerbeton bestehen und mindestens das Muffenendteil (1) eine integrierte Dichtung (5, 12) enthält.

2. Betonrohr nach Anspruch 1, dadurch gekennzeichnet, dass die gegen die Rohrmitte weisenden Aussenkante der Endteile (1, 2) einen umlaufenden Absatz (6) aufweist, um eine Verzahnung mit dem Betonrohr (3) zu erzielen.

3. Betonrohr nach Anspruch 1 oder 2, dadurch gekennzeichnet, dass das Muffenendteil (1) eine Aussparung (10) für eine Dichtung und das Spitzendteil (2) einen Absatz (11) für eine Keildichtung aufweist.

4. Betonrohr nach Anspruch 1 oder 2, dadurch gekennzeichnet, dass das Spitzendteil (2) eine der Dichtung (12) im Muffenendteil (1) entsprechende Aussparung (13) aufweist.

5. Betonrohr nach einem der Ansprüche 1 bis 4, dadurch gekennzeichnet, dass ein zusätzliches stirnseitiges Dichtungssystem vorgesehen ist.

6. Betonrohr nach einem der Ansprüche 1 bis 5, dadurch gekennzeichnet, dass es eine Auskleidung (4, 9) aus Polymerbeton oder Kunststoff aufweist.

7. Betonrohr nach einem der Ansprüche 1 bis 6, dadurch gekennzeichnet, dass die Oberfläche der Endteile (1, 2) einen höheren Anteil Kunstharze aufweist sowier glatt und porenfrei ist.

8. Verfahren zur Herstellung eines Betonrohres nach Anspruch 6, dadurch gekennzeichnet, dass die beiden Endteile (1, 2) auf das zu verarbeitende Betonrohr aufgesetzt werden und dieses in einer Schleuderbank gereinigt wird und anschliessend ein Haftvermittler aufgesprüht wird und dann die Beschichtung mit Polymerbeton oder Kunststoff erfolgt, woraufhin die aufgetragene Masse verteilt und kalibriert wird.

9. Verfahren nach Anspruch 8, dadurch gekennzeichnet, dass nach dem Einbringen des Haftvermittlers eine besonders alkalibeständige Sperrschicht auf der Basis ungesättigter Polyesterharze aufgebracht wird, auf die ein schrumpfarmer Polymerbeton aufgebracht wird, auf den eine elastische und chemikalienbeständige Deckschicht auf der Basis ungesättigter Polyesterharze aufgebracht wird.

## Claims

1. Concrete pipe having a spigot end part and a socket end part, characterised in that the spigot end part (2) as well as the socket end part (1) are prefabricated parts made of polymer concrete, and that at least the socket end part (1) contains an integrated gasket (5, 12).

2. Concrete pipe according to claim 1, characterised in that the outer edge of the pipe end parts (1, 2) which is directed towards the pipe centre comprises a circumferential step (6) in order to achieve an interlocking with the concrete pipe (3).

3. Concrete pipe according to claim 1 or 2, characterised in that the socket end part (1) comprises a recess (10) for receiving a gasket, and the spigot end part (2) comprises a step (11) for receiving a V-gasket.

4. Concrete pipe according to claim 1 or 2, characterised in that the spigot end part (2) comprises a recess (13) corresponding to the gasket (12) in the socket end part (1).

5. Concrete pipe according to any one of claims 1 to 4, characterised in that an additional frontal gasket system is provided.

6. Concrete pipe according to any one of claims 1 to 5, characterised in that the pipe contains a lining (4, 9) of polymer concrete or of synthetic material.

7. Concrete pipe according to any one of claims 1 to 6, characterised in that the surfaces of the end parts (1, 2) contain a higher proportion of synthetic resins and are smooth and pore free.

8. Process for the manufacture of a concrete pipe according to claim 6, characterised in that the two end parts (1, 2) are placed upon the concrete pipe to be processed, the latter is then cleaned on a centrifugal bank, a primer is then sprayed on and the pipe is coated with polymer concrete or synthetic materials, and the composition applied is distributed and calibrated.

9. Process according to claim 8, characterised in that a specially alkali resistant barrier layer based on unsaturated polyester resins is applied after the application of the primer, a low shrinking polymer concrete is applied to the barrier layer, and an elastic and chemically resistant cover layer based on unsaturated polyester resins is applied.

## Revendications

1. Tube en béton comprenant un embout mâle et un embout femelle, caractérisé en ce que l'embout mâle (2) ainsi que l'embout femelle (1) consistent en une pièce préfabriquée en béton polymère, et qu'au moins l'embout femelle (1) comprend un joint intégré (5, 12).

2. Tube en béton selon la revendication 1, caractérisé en ce que le bord extérieur des embouts (1, 2) dirigé vers le milieu du tube comporte un épaulement en retrait circulaire (6) afin d'obtenir un endentement avec le tube en béton (3),

3. Tube en béton selon la revendication 1 ou 2, caractérisé en ce que l'embout femelle (1) comporte un évidement (10) pour recevoir un joint, et que l'embout mâle (2) comporte un épaulement (11) pour recevoir un joint trapézoïdal.

4. Tube en béton selon la revendication 1 ou 2, caractérisé en ce que l'embout femelle (2) comporte un évidement correspondant au joint (12) dans l'embout mâle (1).

5. Tube en béton selon l'une quelconque des revendications 1 à 4, caractérisé en ce qu'un système de joints frontal additionnel est prévu.

6. Tube en béton selon l'une quelconque des revendications 1 à 5, caractérisé en ce qu'il comporte un revêtement intérieur (4, 9) en béton polymère ou en matière synthétique.

7. Tube en béton selon l'une quelconque des revendications 1 à 6, caractérisé en ce que la surface des embouts (1, 2) comprend une proportion plus élevée en résines synthétiques et est lisse et exempte de pores,

8. Procédé de fabrication du tube en béton selon la revendication 6, caractérisé en ce que les deux embouts (1, 2) sont posés sur le tube en béton à façonner, puis ce dernier est nettoyé sur un banc centrifuge, un agent adhésif est appliqué par pulvérisation et ensuite le revêtement en béton polymère ou matière synthétique est appliqué, et que la masse appliquée est distribuée et calibrée.

9. Procédé selon la revendication 8, caractérisé en ce qu'une couche de barrière à base de résines polyesters insaturées, spécialement résistante aux alcalis, est appliquée après l'introduction de l'agent adhésif, qu'un béton polymère à retrait faible est appliqué sur la couche de barrière, et qu'une couche de recouvrement à base de résines polyesters insaturées, élastique et résistante aux produits chimiques, est appliquée sur la couche de barrière.
